# EUROPÄISCHE PATENTSCHRIFT

(11) **EP 3 497 606 B1**
(45) Veröffentlichungstag und Bekanntmachung des Hinweises auf die Patenterteilung: **13.07.2022**
(21) Anmeldenummer: 17745257.0
(22) Anmeldetag: 26.07.2017
(51) Int. Cl.: G06F 21/12

(54) **INDIVIDUELLES VERSCHLÜSSELN VON STEUERBEFEHLEN**
INDIVIDUAL ENCRYPTION OF CONTROL COMMANDS
CHIFFREMENT INDIVIDUEL D'INSTRUCTIONS DE COMMANDE

(30) Priorität: 03.08.2016 DE 102016009439
(43) Veröffentlichungstag der Anmeldung: 19.06.2019
(73) Patentinhaber: Build38 GmbH, 80331 München (DE)
(72) Erfinder: ALBERT, Daniel, 81737 München (DE); SCHUSTER, Helmut, 87660 Irsee (DE)
(74) Vertreter: Schwan Schorer & Partner mbB
(86) Internationale Anmeldenummer: PCT/EP2017/000904
(87) Internationale Veröffentlichungsnummer: WO 2018/024364

(56) Entgegenhaltungen:
- EP-A1- 1 126 355
- EP-A2- 1 943 607
- WO-A1-98/42098
- US-A- 5 530 752
- US-A1- 2002 053 024
- US-A1- 2006 041 747
- US-A1- 2015 222 426

## Beschreibung

Die vorliegende Erfindung ist gerichtet auf ein Verfahren zum effizienten und individuellen Verschlüsseln von Steuerbefehlen, welches es ermöglicht, bereitgestellte Applikationen nicht nur in effizienter, sondern auch in besonders sicherer Weise zu verschlüsseln und an ein Endgerät zu übertragen. Die Erfindung ist ferner gerichtet auf eine entsprechend eingerichtete Verschlüsselungsvorrichtung sowie auf ein Computerprogrammprodukt mit Steuerbefehlen, welche das vorgeschlagene Verfahren implementieren bzw. die vorgeschlagene Verschlüsselungsvorrichtung betreiben.

US 2007/0257360 A1 beschreibt ein Verfahren, um Schutz von illegalen Programmkopien von einem mobilen Endgerät bereitzustellen. Dabei wird eine Applikation mit einem von einer Gerätekennung abhängigen Schlüssel verschlüsselt.

WO 2009/010338 zeigt ein rechnergestütztes Obfuskieren eines Softwareprogramms, wobei ein Quellcode des Softwareprogramms mit einer oder mehreren Annotationen versehen wird, wobei jede Annotation einem bestimmten Codeabschnittes des Quellcodes zugeordnet ist, und eine Information umfasst, ob der betreffende Codeabschnitt zu obfuskieren ist oder nicht.

WO 2010/037525 lehrt ein Verfahren zum Konfigurieren von elektronischen Geräten, wobei auf Grundlage eines durch den Algorithmus verwendeten, in dem elektronischen Gerät gespeicherten ersten Geheimnisses verschlüsselt wird.

DE 10 2012 201505 B4 zeigt ein Authentisierungssystem, bei dem auf ein Mobilfunkgerät eine individualisierte Applikation geladen wird.

Die EP 1126 355 A1 offenbart ein Verfahren gemäß dem Oberbegriff von Anspruch 1. Weitere Verschlüsselungsverfahren sind aus der US 2006/041747 A1, aus der WO 98/42098 A1, aus der US 2002/053024 A1 und aus der EP 1 943 607 A2 bekannt.

Es ist bekannt, Applikationen in Form von Steuerbefehlen über eine zentrale Schnittstelle, beispielsweise einen sogenannten AppStore, bereitzustellen, und hierbei entsprechende Verschlüsselungsalgorithmen mitsamt Signaturen zu verwenden. Hierzu sind insbesondere Kryptographieverfahren bekannt, welche beispielsweise asymmetrische Verfahren beinhalten, bei denen ein geheimer und ein öffentlicher Schlüssel Verwendung findet. Ferner sind diverse Pseudoverschlüsselungsverfahren bekannt, welche lediglich das Erschweren von einem Nachahmen von Quellcode bewirken, jedoch nicht verhindern. Hierbei ist es beispielsweise bekannt, einen Quellcode zu obfuskieren. Dies bedeutet, dass der Quellcode beispielsweise bezüglich der Reihenfolge und der Benennung von Parametern und Methoden verändert wird, ohne dass sich hierbei die bereitgestellte Funktionalität ändert. So können beispielsweise sogenannte sprechende Variablenamen derart verändert werden, dass diese lediglich aus irgendwelchen alphanumerischen Zeichen bestehen und somit keinen semantischen Sinn für einen menschlichen Betrachter ergeben.

Die heute üblichen AppStores funktionieren nach dem Prinzip, dass jeder Endkunde eine identische Kopie derselben signierten App erhält. Der Ablauf vom Entwickler bis hin zur Installation der App auf einem Gerät (Smartphone, Tablet, Notebook, PC) des Endkunden ist wie folgt:
1. Der Entwickler kompiliert das Programm und erstellt daraus eine .apk-Datei für den Android Play Store bzw. ein Bundle für Apple's App Store. Eine .apk-Datei ist letztendlich eine .zip-Datei, die bestimmte Dateien enthalten muss, um vollständig zu sein, z. B. ausführbarer Code, Ressourcen wie Bilder oder Icons, Bildschirm Layouts sowie eine sogenannte "Manifest"-Datei, die als Beschreibung der Applikation dient.
   Der Einfachheit halber wird weiterhin lediglich auf .apk-Dateien Bezug genommen, wobei sich das Verfahren auch auf App-Bundles für iOS bezieht.
2. Die Programmdatei wird mit dem Entwicklerschlüssel signiert.
3. Der Entwickler reicht die vollständige und in sich geschlossene .apk-Datei beim AppStore ein.
4. Der AppStore prüft die .apk-Datei sowie die enthaltene App auf Schadcode, Viren und "unangemessene Inhalte".
5. Hat die .apk-Datei die Prüfung durch den AppStore bestanden, stellt dieser sie zum Download bereit.
6. Wählt ein Endkunde nun diese App (diese .apk-Datei) zum Kauf/Download aus, erhält er eine identische Kopie der in Schritt 3 übermittelten .apk-Datei.
7. Der Installer auf dem Endgerät des Endkunden prüft die Signatur der Datei und damit die Vollständigkeit der Datei.
8. Bei erfolgreicher Signaturprüfung sowie Zustimmung des Endkunden zu den von der App angeforderten Rechten installiert der Installer die App/das .apk auf dem Endgerät.

Gemäß den bekannten Verfahren ist es besonders nachteilig, wenn eine Vielzahl von Steuerbefehlen verschlüsselt werden muss und hierdurch ein erhöhter technischer Aufwand besteht. Hierbei wird gemäß bekannter Verfahren nicht unterschieden, ob es überhaupt notwendig ist, alle Steuerbefehle zu verschlüsseln, sondern vielmehr wird eine gesamte Applikation verschlüsselt und verschickt. Gerade sichere Kryptographieverfahren sind typischerweise rechenaufwendig, wodurch entsprechende Hardware-Kapazitäten vorzuhalten sind. Auch müssen die Applikationen typischerweise mittels eines gesicherten Bereichs bereitgestellt werden, auch wenn diese teilweise Steuerbefehle enthalten, die nicht sicherheitskritisch sind.

Ferner ist es gegenüber dem Stand der Technik besonders nachteilig, dass ein Verschlüsseln oftmals mit Passwörtern durchgeführt wird, welche auf beiden Seiten, also senderseitig und empfängerseitig, bekannt sind. Zwar gibt es vereinzelte Verfahren, welche unterschiedliche Schlüssel verwenden, diese sind jedoch auch wiederum so ausgestaltet, dass, falls ein Angreifer in den Besitz eines Schlüssels gelangt, dieser sich unberechtigt Zugriff zu den Daten verschaffen kann.

Somit ist es eine Aufgabe der vorliegenden Erfindung, ein Verfahren bereitzustellen, welches es erlaubt, mit geringem technischem Aufwand eine sichere Verschlüsselung durchzuführen. Hierbei soll auch Endgeräten ermöglicht werden, welche geringe Hardware-Kapazitäten vorhalten, an einem sicheren Ver- bzw. Entschlüsseln teilzunehmen. Ferner sollen Steuerbefehle in besonders sicherer Weise mittels eines Netzwerks bereitgestellt werden. Es ist ferner eine Aufgabe der vorliegenden Erfindung, eine entsprechend eingerichtete Vorrichtung bereitzustellen bzw. ein Computerprogrammprodukt bereitzustellen, welches Steuerbefehle aufweist, welche das vorgeschlagene Verfahren implementieren bzw. die vorgeschlagene Vorrichtung betreiben.

Die Aufgabe wird gelöst mit den Merkmalen des Patentanspruchs 1. Weitere vorteilhafte Ausgestaltungen sind in den Unteransprüchen angegeben.

Demgemäß wird ein Verfahren zum effizienten und individuellen Verschüsseln von Steuerbefehlen für einzelne Endgeräte vorgeschlagen. Es sind die Schritte vorgeschlagen des Bereitstellens einer Menge von Steuerbefehlen mittels eines Kommunikationsnetzwerks sowie eines Identifizierens einer Teilmenge der Steuerbefehle, welche eine sicherheitskritische Funktionalität bereitstellen. Ferner erfolgt ein Verschlüsseln lediglich der Teilmenge von Steuerbefehlen, wobei das Verschlüsseln in Abhängigkeit einer Endgerätekennung erfolgt.

Erfindungsgemäß ist es besonders vorteilhaft, dass das Verfahren sehr effizient implementiert werden kann, da nicht, wie es bekannt ist, alle Steuerbefehle verschlüsselt werden, sondern es werden nur diejenigen Steuerbefehle identifiziert, welche auch tatsächlich verschlüsselt werden müssen, da dieses sicherheitskritische Funktionalität bereitstellen. Somit werden erhebliche Rechenschritte zum Verschlüsseln von Steuerbefehlen eingespart, und es ist beispielsweise möglich, das vorgeschlagene Verfahren auf einem mobilen Endgerät zu betreiben. Auch ist es besonders vorteilhaft, dass nur eine Teilmenge verschlüsselt wird, da auch auf Servern Rechenkapazitäten begrenzt sind. Zwar weisen Server erhebliche Hardwareressourcen auf, stellen jedoch aber auch eine Vielzahl von Applikationen bzw. Steuerbefehlen bereit. Somit skaliert der erfindungsgemäße Vorteil derart, dass eine Vielzahl von Applikationen auf einem Server bereitgestellt werden kann und der Server dementsprechend je Applikation Steuerbefehle einspart, welche nicht verschlüsselt werden müssen. Somit kann bei gleicher Hardwareauslastung ein Server auch mehrere Applikationen bereitstellen, da diese nur teilweise verschlüsselt werden müssen.

Ferner erfolgt das Verschlüsseln individuell, derart, dass zum Verschlüsseln eine Endgerätekennung verwendet wird. Somit ist es besonders vorteilhaft, dass keine generischen Schlüssel Verwendung finden, und somit jedem Benutzer die gleiche verschlüsselte Applikation bereitgestellt wird, sondern vielmehr wird jede Applikation aufweisend diverse Steuerbefehle speziell für einen Benutzer verschlüsselt. Dies ist erfindungsgemäß deshalb möglich, da eben nicht alle Steuerbefehle verschlüsselt werden, sondern eben nur die sicherheitskritischen. Da das individuelle Verschlüsseln einen erheblichen technischen Aufwand bereitstellt, ist gerade die Kombination aus einem teilweise Verschlüsseln und einem individuellen Verschlüsseln deshalb besonders vorteilhaft, da eine sichere Verschlüsselung bereitgestellt werden kann, die nicht mehr Hardwarekapazitäten benötigt als herkömmliche Verfahren.

Somit wird erfindungsgemäß der technische Mehraufwand eines individuellen Verschlüsselns dadurch aufgehoben, dass eben nur Teilmengen der Steuerbefehle verschlüsselt werden müssen. Somit wirken diese beiden technischen Effekte synergetisch zusammen, derart, dass ohne eine Aufrüstung bestehender Umgebungen ein besonders sicherer verschlüsselter Code bereitgestellt werden kann.

Die Menge von Steuerbefehlen wird mittels eines Telekommunikationsnetzwerks bereitgestellt, derart, dass beispielsweise ein Rechner eines Entwicklers die Steuerbefehle an einen zentralen Server überträgt, der dann die weiteren Verfahrensschritte übernehmen kann. Dies ist insbesondere deshalb vorteilhaft, da sich das vorgeschlagene Verfahren in bestehende Umgebungen nahtlos einfügen lässt. So sind Plattformen bekannt, welche Applikationen bzw. Steuerbefehle auf Anfrage der Nutzer an diese verteilen. Somit ist es erfindungsgemäß möglich, weiterhin Steuerbefehle mittels einer Datenverbindung an einen Server zu übertragen, wobei dieser dann selbsttätig die bereitgestellten Steuerbefehle derart analysiert, dass festgestellt werden kann, welche Steuerbefehle verschlüsselt werden müssen und welche nicht.

Ein Identifizieren einer Teilmenge von Steuerbefehlen, welche sicherheitskritische Funktionalität bereitstellen, kann automatisch oder aber auch manuell durchgeführt werden. Bei einem manuellen Ermitteln werden die Informationen, die beschreiben, welche Steuerbefehle sicherheitskritisch sind, händisch in den Quellcode eingefügt. Dies kann beispielsweise mittels eines Annotierens des Quellcodes erfolgen. Hierbei kann serverseitig dann ein Parser den Quellcode durchsuchen und feststellen, welche Steuerbefehle als sicherheitskritisch markiert sind. Gleiches gilt für Parameter bzw. Variablen, welche ggf. auch zu verschlüsseln sind. Hierzu sind bereits einige Annotationssprachen bekannt, welche erfindungsgemäß wiederverwendet werden können. Somit obliegt es dem Entwickler, seinen Quellcode bzw. die Steuerbefehle derart aufzubereiten, dass eine Information auslesbar ist, die einen Hinweis auf eine sicherheitskritische Funktionalität bereitstellt.

Bei einem automatischen Identifizieren der sicherheitskritischen Steuerbefehle können beispielsweise Sequenzdiagramme derart analysiert werden, dass festgestellt wird, mit welchen Kommunikationspartnern ein Steuerbefehl kommuniziert. Beispielsweise kann innerhalb der Steuerbefehle eine Schnittstelle identifiziert werden, welche zur Kommunikation mit einer sicherheitskritischen Komponente vorgesehen ist. Somit können die entsprechenden Steuerbefehle als sicherheitskritisch markiert werden. Ferner können entsprechend Variablennamen bzw. Variablentypen identifiziert werden, die auf eine Verschlüsselung hinweisen. Findet beispielsweise in den Steuerbefehlen ein gesichertes Protokoll bzw. eine gesicherte Datenübertragung statt, so ist dies bereits ein Hinweis auf eine sicherheitskritische Funktionalität. Auch können entsprechende Variablennamen bzw. Methodennamen einen Hinweis auf eine sicherheitskritische Funktion geben. Auch lässt sich eine Speicherstruktur derart analysieren, dass bestimmte Pakete bzw. Klassen von Steuerbefehlen generell als sicherheitskritisch gelten. Beispielsweise ist es möglich, diese Pakete bzw. Klassen in einem bestimmten Ordner abzuspeichern oder voreingestellte Paketnamen bzw. Klassennamen zu verwenden. Auf diese Art und Weise weiß der Server stets, welche Teilmenge von Steuerbefehlen nunmehr zu verschlüsseln ist und welche Steuerbefehle nicht verschlüsselt werden müssen.

Ferner ist es möglich, die identifizierte Teilmenge von Steuerbefehlen mit sicherheitskritischen Funktionen individuell mittels einer Gerätekennung zu verschlüsseln, und die verbleibende, zweite Teilmenge nicht zu verschlüsseln bzw. mit herkömmlichen Verfahren zu verschlüsseln. Somit gibt es eine erste Teilmenge von Steuerbefehlen, welche sicherheitskritisch sind und somit mit den besonders sicheren vorgeschlagenen Verfahren zu verschlüsseln sind. Die zweite Teilmenge von Steuerbefehlen, welche keine sicherheitskritische Funktionalität bereitstellen, wird somit nicht oder lediglich mit herkömmlichen Verfahren verschlüsselt. Somit ist es wiederum möglich, auf bestehende Umgebungen zurückzugreifen, und auch bestehende Verschlüsselungsalgorithmen zu verwenden. Dadurch, dass durch individuelle Verschlüsselung, wie es hiermit vorgeschlagen wird, ein technischer Mehraufwand entstehen kann, so ist es dennoch sehr effizient, lediglich die notwendigen Steuerbefehle individuell zu verschlüsseln und die weiteren Steuerbefehle beispielsweise asymmetrisch bzw. gemäß herkömmlicher Verfahren zu verschlüsseln.

Als eine sicherheitskritische Funktionalität gilt jeglicher bereitgestellter Dienst bzw. Daten, der vor unberechtigtem Zugriff zu schützen ist. Beispielsweise können sensible Daten einen Hinweis auf persönliche Informationen von Benutzern geben. Somit sind sicherheitskritische Funktionen diejenigen Funktionen, welche solche Daten lesen oder schreiben. Somit soll verhindert werden, dass persönliche Daten, welche speziellen Schutz verdienen, ausgelesen werden. Ferner können die Steuerbefehle Benutzerkonten oder sogar Bankinformationen verwalten. Somit benötigen diese Steuerbefehle einen entsprechend sicheren Schutz, um zu gewährleisten, dass keine Datenmanipulation entsteht. Eine weitere Klasse von sicherheitskritischen Funktionalitäten wird dadurch bereitgestellt, dass gewisse Systemparameter bzw. eine Systemfunktionalität nicht ausgelesen bzw. verändert werden darf. So ist es möglich, mit den Steuerbefehlen auf ein zugrundeliegendes Betriebssystem des Endgeräts zuzugreifen. Dies soll jedoch derart vermieden werden, dass entsprechende Operationen speziell verschlüsselt werden und lediglich von einem bestimmten Benutzer entschlüsselt werden können. So ist es beispielsweise möglich, Steuerbefehle derart auszuführen, dass lediglich eine Maschine deren Dienste in Anspruch nimmt, ohne dass es hierbei möglich ist, diese Daten zu entschlüsseln und ggf. zu manipulieren. Somit wird verhindert, dass Steuerbefehle, welche auf einen Speicherbereich zugreifen, derart umgeschrieben werden, dass sie ebenfalls Zugriff auf unberechtigte Speicherbereiche erhalten. Der Fachmann kennt hierbei weitere Beispiele sicherheitskritischer Funktionalitäten.

Das Verschlüsseln in Abhängigkeit einer Endgerätekennung kann derart erfolgen, dass mindestens eine Endgerätekennung hierbei Verwendung findet. Somit erfolgt ein individuelles Verschlüsseln mindestens eines Endgeräts. Bei einer Endgerätekennung kann es sich beispielsweise um eine Information handeln, welche hardcodiert in ein Endgerät eingeschrieben ist. Beispielsweise ist es möglich, eine Seriennummer auszulesen, welche für jedes Endgerät eindeutig vergeben wird. Somit kann das entsprechende Endgerät bei einer Anfrage von Steuerbefehlen seine Gerätekennung mitverschickten bzw. der bereitstellende Server bzw. die bereitstellende Instanz kann diese Endgerätekennung anfragen. Somit liegt dem Server eine Anfrage vor, welche spezifiziert, welche Steuerbefehle bereitgestellt werden sollen, und es liegt eben die Endgerätekennung vor. Somit kann der Server entscheiden, welche Teilmenge von Steuerbefehlen nunmehr erfindungsgemäß zu verschlüsseln ist, und kann ferner bei diesem Verschlüsseln die Endgerätekennung des anfragenden Benutzers verwenden.

Hierdurch entsteht eine individuelle Verschlüsselung bzw. ein Bereitstellen von individuell verschlüsselten Steuerbefehlen. Diese ist deshalb individuell, da jedem anfragenden Benutzer zwar die gleichen Steuerbefehle bereitgestellt werden können, diese sind aber individuell gemäß der vorhandenen Endgerätekennung verschlüsselt.

Somit ist es ein Vorteil der vorliegenden Erfindung, dass ein Angreifer, der sich Zugang zu sicherheitskritischen Steuerbefehlen verschaffen will, nicht einmal einen Angriffsalgorithmus entwerfen kann, der für alle übermittelten Steuerbefehle gleichermaßen gültig wäre. Vielmehr müsste ein Angreifer alle übertragenden Steuerbefehle eines jeden Endgeräts dann eben auch individuell angreifen bzw. individuell entschlüsseln. Somit reicht es also nicht, dass der Angreifer mittels einer sogenannten Brute Force Attacke ein Passwort ermittelt, welches dann für alle Verschlüsselungen der Steuerbefehle Gültigkeit hat. Vielmehr steigt der Rechenaufwand auf Seiten des Angreifers erheblich, da mittels eines Passworts lediglich eine Menge von Steuerbefehlen entschlüsselt werden kann. Somit wird auch der entstehende Schaden drastisch minimiert, da nicht jegliche Applikationen eines Servers betroffen sind. Dies macht es für einen Angreifer deutlich uninteressanter, die verwendete Verschlüsselung zu decodieren. Sehr wahrscheinlich würde ein Angreifer eher davon ablassen, abgefangene Daten zu decodieren, da er sich vielmehr andere Angriffsziele suchen würde, welche eine herkömmliche Datenverschlüsselung verwenden.

Dadurch, dass das Verschlüsseln in Abhängigkeit der Endgerätekennung des Endgeräts erfolgt, welches die Menge von Steuerbefehlen an ein weiteres Endgerät bereitstellt, ergibt sich der Vorteil, dass alternativ oder additiv zu der Endgerätekennung des anfragenden Endgeräts auch die Endgerätekennung des bereitstellenden Servers eincodiert werden kann. Somit erfolgt ein Verschlüsseln der Teilmenge von Steuerbefehlen anhand einer Serverkennung, was ein zusätzliches Sicherheitsmerkmal darstellt. Somit erfolgt erfindungsgemäß ebenfalls ein individuelles Verschlüsseln einer Teilmenge von Steuerbefehlen, wobei diese jedoch auf den Server abstellt, welcher die Steuerbefehle bereitstellt. Somit kann auch abgesichert werden, dass die Steuerbefehle vom richtigen Server bzw. von der richtigen Serverapplikation bereitgestellt werden. Somit wird verhindert, dass die Steuerbefehle von einer nicht-vertrauenswürdigen Stelle heruntergeladen werden.

Gemäß einem Aspekt der vorliegenden Erfindung erfolgt das Verschüsseln in Abhängigkeit der Endgerätekennung eines Endgeräts, welches de Menge von Steuerbefehlen anfragt. Dies hat den Vorteil, dass die Teilmenge von Steuerbefehlen für jeden einzelnen Benutzer individuell verschlüsselt werden kann. Somit ist es möglich, dass ein Benutzer mittels seines Endgeräts Steuerbefehle anfragt und hierbei seine Endgerätekennung übermittelt bzw. die Endgerätekennung zu einem Auslesen bereitstellt.

Gemäß einem weiteren Aspekt der vorliegenden Erfindung erfolgt das Verschlüsseln mittels eines Obfuskierens. Dies hat den Vorteil, dass alternativ oder additiv zu bekannten Verschlüsselungsverfahren ein Verfahren angewendet wird, welches die Funktionalität der Steuerbefehle nicht beeinträchtigt, aber die menschliche Lesbarkeit der Steuerbefehle verhindert bzw. wesentlich erschwert.

Gemäß einem weiteren Aspekt der vorliegenden Erfindung erfolgt das Verschlüsseln in Abhängigkeit einer Zufallszahl. Dies hat den Vorteil, dass beispielsweise die Obfuskierung anhand eines sogenannten "Seed" durchführbar ist, welcher mittels einer Zufallszahl erzeugt werden kann und im weiteren Verfahren verworfen werden kann, da dieser nicht mehr benötigt wird. Somit ist wiederum ein weiteres Sicherheitsmerkmal erfindungsgemäß gewährleistet.

Gemäß einem weiteren Aspekt der vorliegenden Erfindung wird mindestens die verschlüsselte Teilmenge von Steuerbefehlen mit einer Signatur versehen. Dies hat den Vorteil, dass gerade die sicherheitskritische Funktionalität mittels der Signatur abgesichert wird. Hierbei erfolgt ein digitales Unterschreiben der verschlüsselten Teilmenge beispielsweise durch den Server. Somit wird auch sichergestellt, dass die übertragenen Steuerbefehle auf der Empfängerseite tatsächlich ordnungsgemäß ankommen. Somit lässt sich auch auf Empfängerseite die Signatur prüfen, und es können insbesondere die sicherheitskritischen Steuerbefehle verifiziert werden.

Gemäß einem weiteren Aspekt der vorliegenden Erfindung wird die Menge von Steuerbefehlen, aufweisend verschlüsselte und unverschlüsselte Steuerbefehle, einem Endgerät mittels eines Telekommunikationsnetzwerks bereitgestellt. Dies hat den Vorteil, dass das Endgerät des Benutzers die Steuerbefehle mittels einer Datenleitung bereitgestellt bekommt. Insbesondere ist es vorteilhaft, in dem Telekommunikationsnetzwerk weitere Komponenten vorzuhalten, welche zur Implementierung des vorgeschlagenen Verfahrens notwendig sind. So ist es ein erfindungsgemäßer Vorteil, dass das Verschlüsseln auf einer zentralen Serverinstanz durchgeführt werden kann, und die Steuerbefehle auch über mehrere Komponenten hinweg, beispielsweise mittels des Telekommunikationsnetzwerks, bereitgestellt werden, ohne dass hierbei eine Beeinträchtigung der Sicherheit stattfindet.

Gemäß einem weiteren Aspekt der vorliegenden Erfindung erfolgt das Identifizieren in Abhängigkeit einer textuellen Markierung. Dies hat den Vorteil, dass bereits bestehende annotierte Steuerbefehle Wiederverwendung finden können, und insbesondere dass ein einfaches Verfahren gelehrt wird, welches es einem Entwickler bereits bei der Implementierung bzw. Programmierung ermöglicht, Textmarkierungen einzufügen, die auf eine sicherheitskritische Funktionalität hinweisen. Insbesondere sind bereits Markierungssprachen bekannt, die von entsprechenden Parsern interpretiert werden können. Somit entsteht hierdurch kein großer technischer Aufwand, da auf vorhandene Komponenten zurückgegriffen werden kann.

Gemäß einem weiteren Aspekt der vorliegenden Erfindung erfolgt das Identifizieren in Abhängigkeit einer Speicherstruktur der Steuerbefehle. Dies hat den Vorteil, dass bereits der Entwickler mittels einer Ordnerstruktur bzw. dem Einrichten einzelner Pakete bzw. Klassen festlegen kann, welche Steuerbefehle sicherheitskritische Funktionalitäten bereitstellen und somit gemäß dem vorgeschlagenen Verfahren zu verschlüsseln sind. Hierbei ist es insbesondere vorteilhaft, dass eine Speicherstruktur besonders effizient und vor allem selbsttätig ausgelesen werden kann. Somit ist kein menschliches Zutun notwendig, sondern vielmehr kann das vorgeschlagene Verfahren automatisiert durchgeführt werden.

Gemäß einem weiteren Aspekt der vorliegenden Erfindung liegt die Menge von Steuerbefehlen als Quellcode vor. Dies hat den Vorteil, dass die Steuerbefehle nicht kompiliert sind, sondern vielmehr dass diese als Reintext vorliegen, und somit der technische Aufwand einer Verschlüsselung bzw. eines Obfuskierens sehr gering ist. Generell ist es erfindungsgemäß möglich, die Steuerbefehle auch in ihrer Binärrepräsentation bzw. generell in kompilierter Form zu verschlüsseln, dies ist jedoch technisch aufwändiger und benötigt effizientere Hardwareressourcen.

Gemäß einem weiteren Aspekt der vorliegenden Erfindung weisen die bereitgestellten Steuerbefehle Parameter auf, welche erst auf Anfrage eines Endgeräts mit Werten versehen werden. Dies hat den Vorteil, dass die Steuerbefehle sowohl statische als auch dynamische Teile aufweisen, d. h. also Steuerbefehle, die zumindest teilweise nicht verändert werden und Steuerbefehle, die teilweise vor einem Bereitstellen bzw. zur Laufzeit verändert werden. Hierbei kann es sich um Steuerbefehle handeln, die noch mit Zeitstempeln oder dergleichen versehen werden, und somit dynamisch sind, da diese noch angepasst werden. Somit lässt sich das vorgeschlagene Verfahren auch auf dynamisch generierte Steuerbefehle anwenden, die entsprechend verschlüsselt bzw. signiert werden.

Gemäß einem weiteren Aspekt der vorliegenden Erfindung werden weitere Steuerbefehle vorgesehen, welche die Menge von Steuerbefehlen, aufweisend verschlüsselte und unverschlüsselte Steuerbefehle, einem Endgerät bereitstellen. Dies hat den Vorteil, dass vorhandene Umgebungen, beispielsweise ein AppStore, Wiederverwendung finden können und somit die weiteren Steuerbefehle nicht neu implementiert werden müssen. Somit lässt sich das vorgeschlagene Verfahren in vorhandene Umgebungen einbetten, ohne dass hier Anpassungen notwendig sind. Somit sind die bereitgestellten Steuerbefehle lediglich mittels der weiteren Steuerbefehle zu verteilen. Ferner können diese weiteren Steuerbefehle auch das Identifizieren bzw. Verschlüsseln vornehmen.

Gemäß einem weiteren Aspekt der vorliegenden Erfindung fügen die weiteren Steuerbefehle eine Signatur zu der Menge von Steuerbefehlen hinzu. Dies hat den Vorteil, dass die Umgebung auch die Menge von Steuerbefehlen signiert und nicht lediglich bereitstellt. Das Signieren kann sich insbesondere auf den dynamischen Anteil der Steuerbefehle beziehen, die somit entsprechend abgesichert werden.

Die Aufgabe wird auch gelöst durch eine Verschlüsselungsvorrichtung zum effizienten und individuellen Verschlüsseln von Steuerbefehlen für einzelne Endgeräte, mit einer Schnittstelleneinheit eingerichtet zum Bereitstellen einer Menge von Steuerbefehlen mittels eines Telekommunikationsnetzwerks sowie einer Analyseeinheit eingerichtet zum Identifizieren einer Teilmenge der Steuerbefehle, welche eine sicherheitskritische Funktionalität bereitstellen. Ferner ist eine Verschlüsselungseinheit vorgesehen, welche eingerichtet ist zum Verschlüsseln lediglich der Teilmenge von Steuerbefehlen, wobei das Verschlüsseln in Abhängigkeit einer Endgerätekennung erfolgt.

Ferner wird die Aufgabe gelöst durch ein Computerprogrammprodukt mit Steuerbefehlen, welche das Verfahren implementieren bzw. die vorgeschlagene Verschlüsselungsvorrichtung betreiben.

Erfindungsgemäß ist es besonders vorteilhaft, dass das Verfahren Verfahrensschritte vorschlägt, welche mittels struktureller Merkmale der Verschlüsselungsvorrichtung implementiert werden können. Ferner sieht die Verschlüsselungsvorrichtung strukturelle Merkmale vor, welche eben auch als Verfahrensschritte implementiert werden können.

Die vorliegende Erfindung wird nunmehr anhand beispielhafter Figuren erläutert. Es zeigt:
- Fig. 1:: ein Blockdiagramm einer Verschlüsselungsanordnung gemäß einem Aspekt der vorliegenden Erfindung; und
- Fig. 2:: ein Verfahren zum individuellen Verschlüsseln von Steuerbefehlen gemäß einem Aspekt der vorliegenden Erfindung.

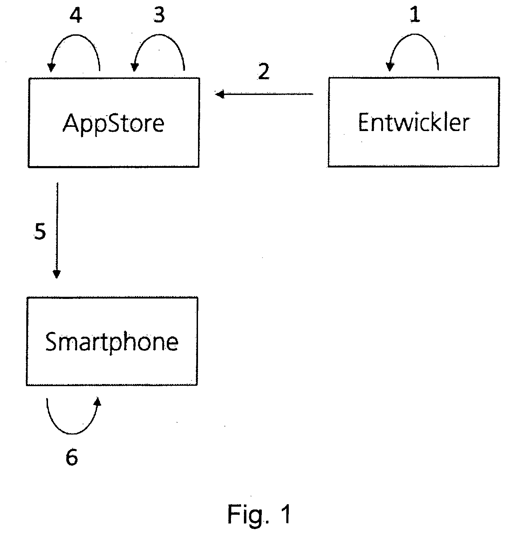

Fig. 1 zeigt eine Anordnung, in der ein Entwickler Steuerbefehle erstellt, und diese mittels einer zentralen Servereinheit, beispielsweise einem AppStore, diese an Benutzer verteilt, die diese Steuerbefehle mittels ihres Smartphones abrufen. Wenn sicherheitskritische Applikationen über solche zentralen Verteiler verteilt werden, dann kann ein Angreifer die Applikation analysieren und die Ergebnisse der Analyse auf alle Benutzer der Applikation übertragen. Der Angreifer muss nur einmal die Applikation analysieren, um alle Benutzer der Applikation anzugreifen.

Hierzu können erfindungsgemäß in der Applikation, also in den Steuerbefehlen, vom Entwickler Informationen gespeichert werden, die sicherheitskritische Daten bezeichnen. Es werden nur statische Teile der Applikationen mit einem Entwicklerschlüssel signiert. Dies erfolgt in einem Verfahrensschritt 1, wie er in Fig. 1 eingetragen ist.

Danach erfolgt in einem weiteren Verfahrensschritt 2 ein Übertragen der Applikation von dem Entwickler an den AppStore. Daraufhin erfolgt in Verfahrensschritt 3, dass bei der Auswahl der Applikation im AppStore durch einen Kunden geprüft wird, welche Daten sicherheitskritisch sind. Die sicherheitskritischen Daten werden für jeden Kunden und jedes Gerät individuell obfuskiert.

In einem darauffolgenden Verfahrensschritt 4 werden die dynamischen Teile der Applikation mit einem Schlüssel des AppStores signiert, und die Signatur wird der Signatur des Entwicklers von Punkt 1 hinzugefügt.

In Verfahrensschritt 5 wird dann die Applikation vom Appstore an den Kunden übertragen. In dem darauffolgenden Verfahrensschritt 6 prüft der Installer auf dem Smartphone des Kunden die Signatur des Entwicklers über statische Teile und Signatur des AppStores über die dynamischen Teile.

Somit wird ein Angriff auf sicherheitskritische Applikationen ohne sicheres Element erschwert. Ferner muss der Entwickler die Obfuskierung nicht selbst vornehmen. Die Änderungen am Kundengerät betreffen somit nur den Installer und sind daher minimal.

Unter dem Obfuskieren wird verstanden, dass ein Verfahren durchgeführt wird, womit Programm oder Sourcecode in eine für Menschen schwer lesbare oder unverständliche Form gebracht wird, um Angriffe oder Reverse Engineering zu erschweren. Das eigentliche Programm läuft allerdings nach wie vor äquivalent ab wie das Originalprogramm.

Als Manifest wird eine Metadatei gezeichnet, die (optionale) beschreibende Eigenschaften eines Programms beinhaltet. Diese gib es in verschiedenen Plattformen, wie Windows oder Java.

Sicherheitskritisch in einem Programm sind alle Teile, die Schlüssel bzw. sensitive Operationen enthalten. Das heißt die Berechnung des Payment Tokens aufgrund der Kreditkartendaten enthält zwei sicherheitskritische Aspekte: Kreditkartendaten und algorithmische Berechnungen des Payment Tokens. Erkennbar, welche Teile kritisch sind und welche nicht, ist nur schwer möglich, da dies Teil des Anwendungsfiles bzw. Gesamtsystems ist.

Ferner erhöht ein Obfuskieren von Native-Code im Vergleich zu Java-Bit-Code die Sicherheit. Native-Code läuft auf dem Prozessor für eine spezielle Architektur. Dieser Code ist hoch optimiert, parallelisiert und maschinennah, d. h. von einer Person schwer zu verstehen. Java-Code ist ein sogenannter Intermediate-Code für eine virtuelle Architektur. Eine virtuelle Maschine transformiert den Intermediate-Code auf die eigentliche Maschinensprache der Architektur. Da Java den Intermediate-Code interpretiert, ist es nicht möglich, beliebige Obfuskationen auszuführen, da sonst die virtuelle Maschine den Code nicht mehr übersetzen kann.

Statische bzw. dynamische Teile von Steuerbefehlen können beispielsweise wie folgt definiert werden. Jede Applikation ist statisch, d. h. der Entwickler kompiliert das Programm, und dieses wird statisch, also unverändert, in den Appstore gestellt und vom Enduser heruntergeladen. Jeder User bekommt das gleiche Programm. Dynamisch bedeutet hingegen, dass der Appstore gewisse Teile im Programm generieren kann, z. B. Zufallszahlen, RSA-Key-Pair, Uhrzeit/Datum, ..., d. h. jeder User bekommt ein unterschiedliches Programm.

Wenn die Steuerbefehle statisch sind, unterschreibt bzw. signiert der Entwickler mit seinem Schlüssel die Applikation und stellt sie in den Appstore. So wird sichergestellt, dass beim Übermitteln der Applikation nichts verändert wurde. Wenn Teile der Applikation dynamisch sind und erst vom Appstore beim Herunterladen vom Enduser gefüllt bzw. generiert werden, kann über die dynamischen Teile keine Signatur berechnet werden, sondern dies erfolgt erst durch den Appstore. Diese Signatur des Appstores wird dann an die gesamte Applikation angehängt.

Eine statische Signatur ist hierbei eine Signatur über alle Teile der Applikation, Code, Bilder, Strings, oder dergleichen, die nach dem Kompilieren beim Entwickler nicht mehr verändert werden. Eine dynamische Signatur ist eine Signatur über alle Teile, die im AppStore User-spezifisch erstellt bzw. generiert wurden.

Ferner gibt es Fälle, in denen der AppStore signiert. Dies liegt beim Appstore-Provider, ob es vorgesehen ist oder nicht. Sobald Applikationen dynamische Segmente enthalten, kann es notwendig sein, um diesem Code bzw. Datenbereichen zu vertrauen.

Erfindungsgemäß ist es besonders vorteilhaft, dass die im Stand der Technik zitierten Verfahrensschritte erfindungsgemäß erweitert werden. So wurden bereits eingangs acht Verfahrensschritte beschrieben, über die übliche Appstores funktionieren. Dort ist der Ablauf vom Entwickler bis hin zur Installation der App auf einem Gerät, d. h. Smartphone, Tablet, Notebook, PC, des Endkunden beschrieben. Diese Verfahrensschritte werden gemäß einem Aspekt der vorliegenden Erfindung wie folgt erweitert.

Erweiterung von Schritt 1:
In der "Manifest"-Datei werden vom Entwickler zusätzliche Informationen hinterlegt, die festlegen, welche der ausführbaren Dateien bzw. Codesegmente innerhalb der .apk-Datei besonders sicherheitskritisch sind.
Vorzugsweise lagert der Entwickler die kritischen Funktionen in eigene ausführbare Dateien aus, damit die App sowie deren Aufzeit durch die Obfuskierung nicht unnötig aufgebläht wird.
Vorzugsweise liegen die sicherheitskritischen ausführbaren Dateien nicht in Java-Bytecode, sondern in Native-Code vor. Dies erhöht die Sicherheit der Obfuskierung drastisch.

Erweiterung von Schritt 2:
Vor dem Erzeugen der Signatur wird in der Manifest-Datei des .apk nachgesehen, ob eine ausführbare Datei im .apk als sicherheitskritisch markiert ist. Ist dies der Fall, wird keine Signatur über das gesamte .apk gerechnet, lediglich über die weiterhin statischen Teile. Für Apps ohne sicherheitskritische Teile wird wie gewohnt die Signatur über das gesamte .apk hinzugefügt.

Erweiterung von Schritt 6:
Falls das .apk über keine komplette Signatur verfügt, wird in der Manifest-Datei des .apk nachgesehen, welche ausführbare Dateien als sicherheitskritisch markiert sind, Diese Dateien werden downloadindividuell obfuskiert, d. h. das zur Verfügung gestellte .apk ist nicht nur für jeden Endkunden, sondern auch für jedes einzelne Gerät des Endkunden individuell obfuskiert. Dies erhöht die Sicherheit zusätzlich. Die notwendige "Seed", um die Obfuskierung durchzuführen, wird mittels Zufallszahl erzeugt und nach der Obfuskierung verworfen, da sie nicht mehr benötigt wird.

Über die dynamisierten Werte innerhalb des APKs wird eine Signatur mit dem Schlüssel des AppStores gerechnet und dieser zu der Signatur des App-Entwicklers hinzugefügt. Anschließend wird das .apk wie gewohnt zum Endgerät des Endkunden übertragen.

Erweiterung von Schritt 7:
Der Installer auf dem Endgerät überprüft die statische Signatur des Entwickler sowie die optionale Signatur des AppStores über die dynamischen Inhalte.

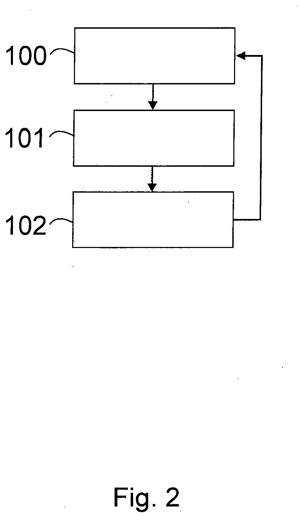

Fig. 2 zeigt ein Verfahren zum effizienten und individuellen Verschlüsseln von Steuerbefehlen für einzelne Endgeräte. Es sind die Schritte vorgesehen des Bereitstellens 100 einer Menge von Steuerbefehlen mittels eines Telekommunikationsnetzwerks. Ferner erfolgt ein Identifizieren 101 einer Teilmenge der Steuerbefehle, welche eine sicherheitskritische Funktionalität bereitstellen. Außerdem erfolgt ein Verschlüsseln 102 lediglich der Teilmenge von Steuerbefehlen, wobei das Verschlüsseln in Abhängigkeit einer Endgerätekennung erfolgt.

Vorliegend nicht gezeigt ist ein Datenträger, mit einem Computerprogrammprodukt mit Steuerbefehlen, welche das vorgeschlagene Verfahren implementieren bzw. die vorgeschlagene Vorrichtung betreiben.

Erweiterung von Schritt 7:
Der Installer auf dem Endgerät überprüft die statische Signatur des Entwickler sowie die optionale Signatur des AppStores über die dynamischen Inhalte.

Fig. 2 zeigt ein Verfahren zum effizienten und individuellen Verschlüsseln von Steuerbefehlen für einzelne Endgeräte. Es sind die Schritte vorgesehen des Bereitstellens 100 einer Menge von Steuerbefehlen mittels eines Telekommunikationsnetzwerks. Ferner erfolgt ein Identifizieren 101 einer Teilmenge der Steuerbefehle, welche eine sicherheitskritische Funktionalität bereitstellen. Außerdem erfolgt ein Verschlüsseln 102 lediglich der Teilmenge von Steuerbefehlen, wobei das Verschlüsseln in Abhängigkeit einer Endgerätekennung erfolgt.

Vorliegend nicht gezeigt ist ein Datenträger, mit einem Computerprogrammprodukt mit Steuerbefehlen, welche das vorgeschlagene Verfahren implementieren bzw. die vorgeschlagene Vorrichtung betreiben.

## Patentansprüche

1. Verfahren zum effizienten und individuellen Verschlüsseln von Steuerbefehlen für einzelne Endgeräte, mit den Schritten:
- Bereitstellen (100) einer Menge von Steuerbefehlen mittels eines Telekommunikationsnetzwerks;
- Identifizieren (101) einer Teilmenge der Steuerbefehle, welche eine sicherheitskritische Funktionalität bereitstellen; und
- Verschlüsseln (102) lediglich der Teilmenge von Steuerbefehlen, wobei das Verschlüsseln (102) in Abhängigkeit einer Endgerätekennung eines Endgerätes erfolgt, welches die Menge von Steuerbefehlen an ein weiteres Endgerät bereitstellt.

2. Verfahren nach Anspruch 1, **dadurch gekennzeichnet, dass** das Verschlüsseln (102) in Abhängigkeit der Endgerätekennung eines Endgeräts erfolgt, welches die Menge von Steuerbefehlen anfragt.

3. Verfahren nach einem der vorhergehenden Ansprüche, **dadurch gekennzeichnet, dass** das Verschlüsseln (102) mittels eines Obfuskierens erfolgt.

4. Verfahren nach einem der vorhergehenden Ansprüche, **dadurch gekennzeichnet, dass** das Verschlüsseln (102) in Abhängigkeit einer Zufallszahl erfolgt.

5. Verfahren nach einem der vorhergehenden Ansprüche, **dadurch gekennzeichnet, dass** mindestens die verschlüsselte Teilmenge von Steuerbefehlen mit einer Signatur versehen wird.

6. Verfahren nach einem der vorhergehenden Ansprüche, **dadurch gekennzeichnet, dass** die Menge von Steuerbefehlen, aufweisend verschlüsselte und unverschlüsselte Steuerbefehle, einem Endgerät mittels eines Telekommunikationsnetzwerks bereitgestellt wird.

7. Verfahren nach einem der vorhergehenden Ansprüche, **dadurch gekennzeichnet, dass** das Identifizieren (101) in Abhängigkeit einer textuellen Markierung erfolgt.

8. Verfahren nach einem der vorhergehenden Ansprüche, **dadurch gekennzeichnet, dass** das Identifizieren (101) in Abhängigkeit einer Speicherstruktur der Steuerbefehle erfolgt.

9. Verfahren nach einem der vorhergehenden Ansprüche, **dadurch gekennzeichnet, dass** die Menge von Steuerbefehlen als Quellcode vorliegt.

10. Verfahren nach einem der vorhergehenden Ansprüche, **dadurch gekennzeichnet, dass** die bereitgestellten Steuerbefehle Parameter aufweisen, welche erst auf Anfrage eines Endgeräts mit Werten versehen werden.

11. Verfahren nach einem der vorhergehenden Ansprüche, **dadurch gekennzeichnet, dass** weitere Steuerbefehle vorgesehen werden, welche die Menge von Steuerbefehlen, aufweisend verschlüsselte und unverschlüsselte Steuerbefehle, einem Endgerät bereitstellen.

12. Verfahren nach Anspruch 11, **dadurch gekennzeichnet, dass** die weiteren Steuerbefehle eine Signatur zu der Menge von Steuerbefehlen hinzufügen.

13. Verschlüsselungsvorrichtung zum effizienten und individuellen Verschlüsseln von Steuerbefehlen für einzelne Endgeräte, mit:
- einer Schnittstelleneinheit eingerichtet zum Bereitstellen (100) einer Menge von Steuerbefehlen mittels eines Telekommunikationsnetzwerks;
- einer Analyseeinheit eingerichtet zum Identifizieren (101) einer Teilmenge der Steuerbefehle, welche eine sicherheitskritische Funktionalität bereitstellen; und
einer Verschlüsselungseinheit eingerichtet zum Verschlüsseln (102) lediglich der Teilmenge von Steuerbefehlen, **dadurch gekennzeichnet, dass** das Verschlüsseln (102) in Abhängigkeit einer Endgerätekennung eines Endgerätes erfolgt welches die Menge von Steuerbefehlen an ein weiteres Endgerät bereitstellt.

14. Computerprogrammprodukt mit Steuerbefehlen, welche das Verfahren gemäß einem der Ansprüche 1 bis 12 implementieren.

## Claims

1. Method for efficiently and individually encrypting control commands for single terminals, having the steps of:
- providing (100) a set of control commands by means of a telecommunication network;
- identifying (101) a subset of the control commands that provide a safety-critical functionality; and
- encrypting (102) just the subset of control commands, wherein
the encryption (102) is effected on the basis of a terminal identifier of a terminal that provides the set of control commands to a further terminal.

2. Method according to Claim 1, **characterized in that** the encryption (102) is effected on the basis of the terminal identifier of a terminal that requests the set of control commands.

3. Method according to either of the preceding claims, **characterized in that** the encryption (102) is effected by means of obfuscation.

4. Method according to one of the preceding claims, **characterized in that** the encryption (102) is effected on the basis of a random number.

5. Method according to one of the preceding claims, **characterized in that** at least the encrypted subset of control commands is provided with a signature.

6. Method according to one of the preceding claims, **characterized in that** the set of control commands, comprising encrypted and unencrypted control commands, is provided to a terminal by means of a telecommunication network.

7. Method according to one of the preceding claims, **characterized in that** the identification (101) is effected on the basis of a textual marking.

8. Method according to one of the preceding claims, **characterized in that** the identification (101) is effected on the basis of a storage structure relating to the control commands.

9. Method according to one of the preceding claims, **characterized in that** the set of control commands is available as source code.

10. Method according to one of the preceding claims, **characterized in that** the provided control commands comprise parameters that are provided with values only at the request of a terminal.

11. Method according to one of the preceding claims, **characterized in that** there is provision for further control commands that provide the set of control commands, comprising encrypted and unencrypted control commands, to a terminal.

12. Method according to Claim 11, **characterized in that** the further control commands add a signature to the set of control commands.

13. Encryption apparatus for efficiently and individually encrypting control commands for single terminals, having:
- an interface unit configured to provide (100) a set of control commands by means of a telecommunication network;
- an analysis unit configured to identify (101) a subset of the control commands that provide a safety-critical functionality; and
- an encryption unit configured to encrypt (102) just the subset of control commands, **characterized in that** the encryption (102) is effected on the basis of a terminal identifier of a terminal that provides the set of control commands to a further terminal.

14. Computer program product containing control commands that implement the method according to one of Claims 1 to 12.

## Revendications

1. Procédé de chiffrement efficace et individuel d'instructions de commande pour des terminaux individuels, comprenant les étapes consistant à :
- fournir (100) un ensemble d'instructions de commande au moyen d'un réseau de télécommunications ;
- identifier (101) un sous-ensemble des instructions de commande qui fournissent une fonctionnalité critique pour la sécurité ; et
- chiffrer (102) uniquement le sous-ensemble d'instructions de commande, dans lequel le chiffrement (102) est effectué en fonction d'un identifiant de terminal d'un terminal qui fournit l'ensemble d'instructions de commande à un autre terminal..

2. Procédé selon la revendication 1, **caractérisé en ce que** le chiffrement (102) est effectué en fonction de l'identifiant de terminal d'un terminal qui demande l'ensemble d'instructions de commande.

3. Procédé selon l'une des revendications précédentes, **caractérisé en ce que** le chiffrement (102) est effectué au moyen d'un obfuscation.

4. Procédé selon l'une des revendications précédentes, **caractérisé en ce que** le chiffrement (102) est effectué en fonction d'un nombre aléatoire.

5. Procédé selon l'une des revendications précédentes, **caractérisé en ce qu'**au moins le sous-ensemble chiffré d'instructions de commande est pourvu d'une signature.

6. Procédé selon l'une des revendications précédentes, **caractérisé en ce que** l'ensemble d'instructions de commande, comportant des instructions de commande chiffrées et non chiffrées, est fourni à un terminal au moyen d'un réseau de télécommunications.

7. Procédé selon l'une des revendications précédentes, **caractérisé en ce que** l'identification (101) est effectuée en fonction d'un marquage textuel.

8. Procédé selon l'une des revendications précédentes, **caractérisé en ce que** l'identification (101) est effectuée en fonction d'une structure de mémoire des instructions de commande.

9. Procédé selon l'une des revendications précédentes, **caractérisé en ce que** l'ensemble d'instructions de commande se présente sous la forme d'un code source.

10. Procédé selon l'une des revendications précédentes, **caractérisé en ce que** les instructions de commande fournies comportent des paramètres auxquels des valeurs ne sont attribuées que sur demande d'un terminal.

11. Procédé selon l'une des revendications précédentes, **caractérisé en ce qu'**il est prévu d'autres instructions de commande qui fournissent à un terminal l'ensemble d'instructions de commande, comportant des instructions de commande codées et non codées.

12. Procédé selon la revendication 11, **caractérisé en ce que** les autres instructions de commande ajoutent une signature à l'ensemble d'instructions de commande.

13. Dispositif de chiffrement pour le chiffrement efficace et individuel d'instructions de commande pour des terminaux individuels, comprenant :
- une unité d'interface conçue pour fournir (100) un ensemble d'instructions de commande au moyen d'un réseau de télécommunications ;
- une unité d'analyse conçue pour identifier (101) un sous-ensemble des instructions de commande qui fournissent une fonctionnalité critique pour la sécurité ; et
- une unité de chiffrement conçue pour chiffrer (102) uniquement le sous-ensemble d'instructions de commande, **caractérisé en ce que** le chiffrement (102) est effectué en fonction d'un identifiant de terminal d'un terminal qui fournit l'ensemble d'instructions de commande à un autre terminal.

14. Produit de programme d'ordinateur comprenant des instructions de commande qui mettent en œuvre le procédé selon l'une des revendications 1 à 12.
